# EUROPEAN PATENT SPECIFICATION

(11) **EP 3 300 573 B1**
(45) Date of publication and mention of the grant of the patent: **28.11.2018**
(21) Application number: 17194027.3
(22) Date of filing: 29.09.2017
(51) Int. Cl.: A01D 34/416

(54) **HEAD FOR BRUSH CUTTERS**
KOPF FÜR FREISCHNEIDER
TÊTE POUR DÉBROUSSAILLEUSE

(30) Priority: 03.10.2016 IT 201600098726 U
(43) Date of publication of application: 04.04.2018
(73) Proprietor: Fima Garden S.R.L., 59016 Poggio a Caiano (PO) (IT)
(72) Inventor: Miggiano, Antonio, 59016 Poggio a Caiano (PO) (IT)
(74) Representative: Fanfani, Stefano

(56) References cited:
- EP-A1- 0 426 039
- EP-A1- 2 077 066
- WO-A2-2009/067184
- US-A1- 2015 264 861

## Description

### Technical field

The present invention belongs to the sector of brush cutters for mowing lawn and vegetation, i.e. to those devices wherein a rotary head drives into rotation a flexible wire, which operates as a cutting element. Specifically, the present invention refers to a head which internally accommodates a sprocket on which a cutting wire is wound, whose end sections project from the head and cut the vegetation whenever the head rotates.

### Present status of the art

Brush cutter apparatuses are known for a long time which comprise a rotary head located at an end of a transmission rod, where a handle is applied by means of which an operator operates the apparatus, which transmits the rotatory motion of the motor to the cutting tools. Such an apparatus is known from WO 2009/067182 A2.

Usually the brush cutter apparatus is driven by a motor, typically an electric or internal combustion one, and the rotary head comprises a support element which is driven into rotation by the driving shaft of the brush cutter; in turn, the head drives one or several cutting elements into rotation.

Initially said cutting elements were made up of metal blades, however the latter were very dangerous for users, in that they might cause even major injuries.

This is the reason why rotary heads have been developed, which remove vegetation without using blades, thanks to the cutting action exerted by a flexible wire, made from a polymeric material, whose end comes out from the rotary head and, under the action of the centrifugal force, defines a cutting plane.

The flexible cutting wire is usually wound around a sprocket which is located internally to the rotary head. Unavoidably, in operation, the end of the wire wears out or breaks and consequently it shall be replaced, by extracting a new section of wire out of the sprocket. A number of systems have been developed for this purpose, aiming at not being obliged to switch the brush cutter off in order to manually extract the wire.

Some rotary heads are provided with a mechanism which allows to press the base element of the head to ground for a while to unwind a predetermined length of the cutting wire, in order to recover the ends of the wire that had worn out. The rotary heads of this type comprise a sprocket preset to wind a coil of flexible wire.

A typical functional diagram comprises a head internally to which a sprocket is associated with, movable between a work position, wherein it is rotationally integral with the head, and a wire extraction position, wherein the sprocket does not rotationally engage the rotary head; in the latter position, the action exerted by the centrifugal force causes the extraction of a predetermined section of the cutting wire.

In particular, heads have been developed wherein the sprocket has a special toothing below which co-operates with another special toothing formed in the housing underneath, so that whenever the sprocket moves upwards it disengages itself from the driving action exerted by the rotary head. After feeding the cutting wire, the sprocket, pushed by elastic means, goes back to its lower position and rotationally engages the rotary head again.

Usually the box-like body that accommodates the sprocket consists of two half-shells, coupled with each other by way of elastic snap connection means. These are coupling means that comprise male connectors, consisting of elastic tangs with a wedge-shaped end featuring a projecting base, so that, after penetrating their respective insertion seats, they cannot be taken off by a simple traction, but it is necessary to press the end portion of the male connector inwards. In this way the two half-bodies, after being coupled together, are in a precisely defined mutual position.

In operation, the centrifugal force pushes the tangs outwards and further consolidates coupling.

Whenever the sprocket gets empty, it is necessary to rewind it with a new cutting wire; for this purpose, a number of solutions have been developed; in the first models, in order to re-load the wire onto the sprocket it was necessary to open the head, to take the sprocket out therefrom and to manually re-wind the wire, and the reinsert the sprocket into the head and to close it again. This operation is difficult to perform for many users.

This is the reason why heads for brush cutters have been developed wherein it is possible to re-wind the wire without being obliged to open them; in this type of heads, the operator shall manually rotate a part of the head, while simultaneously pressing it in order to disengage the sprocket and make it possible for it to rotate with respect to the rest of the head.

The most popular known solutions comprise a base knob integral with the sprocket which comes out below from the shell; it is possible to make the sprocket rotate by pressing the knob toward the inside of the shell; this axial movement makes it possible to have a new section of the cutting wire automatically retracted and to re-load the sprocket by re-winding the wire.

The known solutions have a number of drawbacks, in particular it is necessary that the base knob have a remarkable thickness, in order for it to be grasped by the operator who, in order to re-load the wire, shall push the knob towards the inside of the shell and, simultaneously, make it rotate around its axis to wind the newly fed cutting wire.

The remarkable dimensions of the base knob in the axial direction are such that the cutting wire is not capable of cutting the vegetation close to the ground; in addition, the operator shall make attention to leave a space between his/her hand and the shell when grasping the knob, to make it possible for the knob to partially come back to within the shell.

In addition, it shall be possible for the heads of the brush cutters to be easily opened in order to clean them while they are being operated and it shall also be possible to completely disassemble them in order to perform maintenance operations thereon; many types of heads do not allow to perform these operations easily, because they are difficult to open without using tools and/or because they are constructed in such a way that, when opened, they decompose in a high number of small-size component parts, which implies a high risk of getting lost when operating in the country.

### Objects and summary of the invention

A first object of the invention is to provide a head for brush cutters wherein the cutting wire can be fed easily, by striking it to ground, and simultaneously to provide a lawn mower head simple to assemble and disassemble, as well as easy to re-wound with a cutting wire even by operators who wear work gloves.

A non-secondary object of the present invention is to provide a head for brush cutters that allows to mow the vegetation close to the ground.

Further objects and advantages of the invention will be apparent to those skilled in the art upon reading the following text.

The heads of this type are rotationally connected to the shaft of the brush cutter according to known means.

The above described objects are achieved by a new-concept head wherein a projecting base knob is replaced by an innovative base cap.

More specifically, the present invention consists of a head comprising a rotary shell slidingly coupled with a feeding assembly, co-operating with each other in an innovative manner.

The rotary shell comprises an upper cover, rotationally connected to the shaft of the brush cutter and connected to an annular body underneath, to form a box-like body internally to which there is slidingly accommodated the sprocket that carries the cutting wire, the latter going out from the shell through appropriate side openings.

In a preferred embodiment, the connection between the cover and the annular body is a reversible one, in order to make it easier to disassemble the head.

The upper face of the annular body includes rotatory motion transmission means which engage corresponding rotatory motion reception means that are present in the lower portion of said sprocket; contrast means of an elastic type are interposed between the top of the latter and the lower part of the upper cover, whereby the sprocket is pushed against the annular body underneath which transmits the rotatory motion thereto.

The sprocket is in turn connected to an innovative base cap, external to the rotary shell and located below the annular body, with which it forms the feeding assembly, and consequently the latter is slidingly associated with the rotary shell.

According to a particularly comfortable and functional version, the sprocket is connected to the base cap reversibly, so as to make it easier to disassemble the head.

In order to re-load the sprocket, the operator shall press the base cap and simultaneously rotate it; in the case of the head according to the present patent application, the shape of the cap makes it easy for an operator to grasp it while wearing a glove and to press it against the inside of the shell and to simultaneously make it rotate in order to re-wind the newly fed wire, whereby it is much simpler to re-load the wire than in the case of heads having a projecting base knob.

In operation, in order to lengthen the wire that has worn out it is sufficient for the operator to strike the base cap to ground, so as to make the sprocket slide upwards and make it disengage from the annular body that transmit motion thereto.

The centrifugal force makes the wire come out and the elastic contrast means push the sprocket against the annular body again, so as to engage the means that transmit motion between the latter and the sprocket again.

### Brief description of the drawings

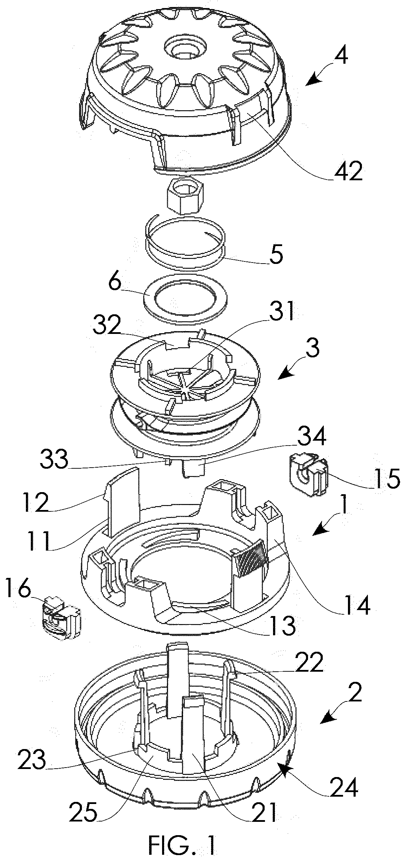

**Figure 1** shows an exploded top view of an embodiment of the head according to the present patent application. The figure shows: rotatory motion transmission means (13) which engage corresponding reception means (33) of a sprocket (3), longitudinal ridges (25), the lateral surface (24) of a base cap (2), connection means (21) whose ends include a corresponding wedge-shaped ridge (22) which engages a corresponding insertion seat (32) after crossing a corresponding longitudinal slit (31), longitudinal slots (23) which are engaged by longitudinal ridges (34), transversal slits (16) of internal removable bushings (15), and reversible connection means (11) whose ends include a respective wedge-shaped ridge (12) which engages a corresponding insertion seat (42) present in said cover (4). The figure also shows elastic contrast means (5), a washer (6), and side containment means (14) on the upper face of an annular body (1).

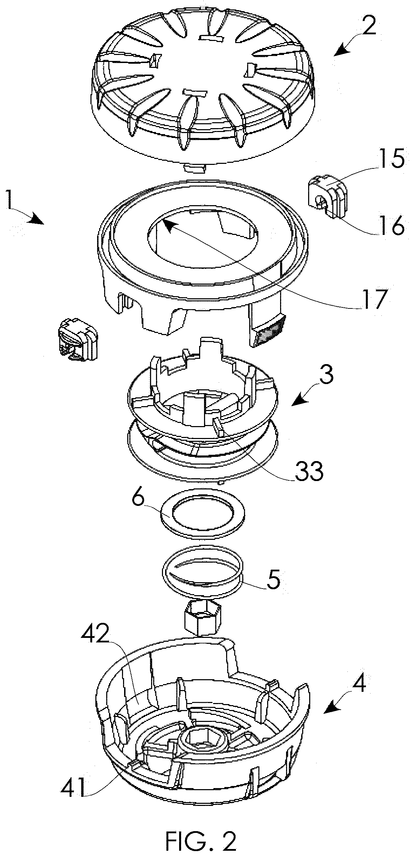

**Figure 2** shows a bottom exploded view of the head according to the previous figure, which highlights the side openings and transversal ridges (41) on the cover (4), besides the inner lateral surface (17) of the annular body (1).

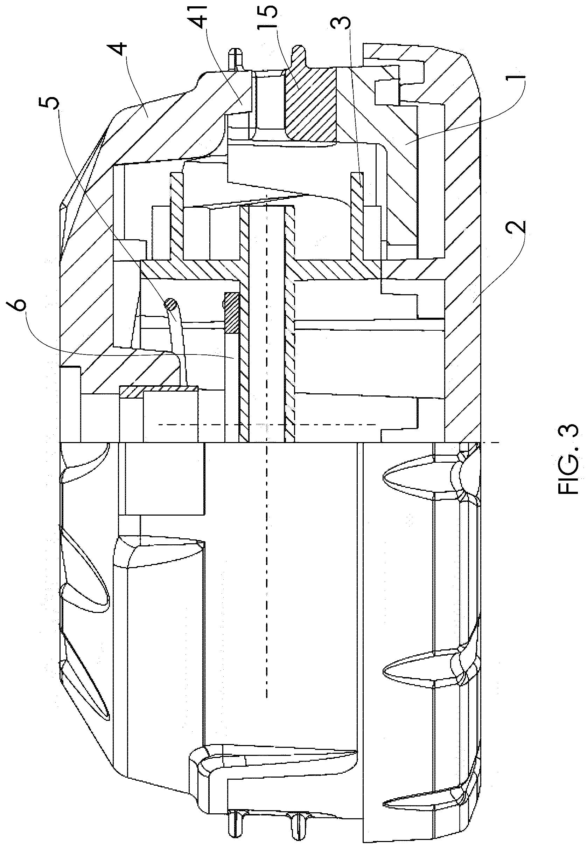

**Figure 3** shows a half-section of the head in a retracted cutting wire feeding position.

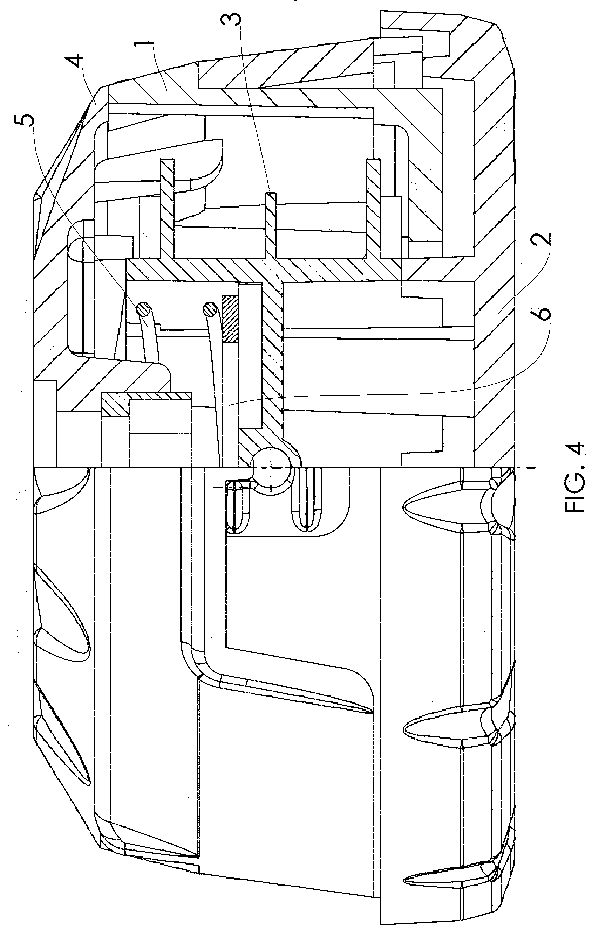

**Figure 4** shows a half-section of the head in a retracted cutting wire feeding position.

### Detailed description of an embodiment of the invention

In a preferred embodiment, the head for brush cutters according to the present patent application comprises a sprocket (3) on which a cutting wire is wound, the sprocket being accommodated inside a rotary shell which receives motion from the motor of the brush cutter and is formed of an upper cover (4) connected to a lower annular body (1). The connection between the cover (4) and the annular body (1) is a reversible one and, in the embodiment shown in the figures, it is implemented by way of male connectors having the form of elastic snap tangs which longitudinally rise up from the upper face of said annular body (1) and whose ends include a respective wedge-shaped ridge (12) which engages a corresponding insertion seat (42) present in said cover (4) .

The sprocket (3) is rotationally and slidingly associated with the annular body (1) underneath, whose upper face is provided with side containment means (14) which define an at least partially cylindrical cavity, which receives the sprocket (3) and features side openings to make it possible for the wire to go out.

In the embodiment here described the sprocket (3) is reversibly connected to a base cap (2) by way of connection means (21) which originate from the upper face of the base cap (2) and whose ends engage corresponding insertion seats (32), after crossing longitudinal slits (31) present in the body itself of the sprocket (3).

In a particularly practical and functional embodiment said connection means are reversible so as to allow for an easy and quick disassembling of the head; they can be formed of snap tangs whose ends feature a wedge-shaped ridge (22). The annular body (1) receives motion from the cover (4) and transmits it to said sprocket (3) thanks to rotatory motion transmission means (13) present on its upper face which engage corresponding rotatory motion reception means (33) present in the lower part of said sprocket (3) whenever the latter is kept pressed down against said annular body (1) by elastic contrast means (5).

Preferably are said rotatory motion transmission means (13) of a unidirectional type and in a practical embodiment the elastic contrast means (5) comprise at least one helical spring.

Whenever the operator strikes the base cap (2) to ground, the action of the elastic contrast means (5) is overcome and the sprocket (3) moves from the extended work position to the retracted wire feeding position, in this way the rotatory motion transmission between the annular body (1) and the sprocket (3) is interrupted, i.e. the rotatory motion reception means (33) disengage themselves from the rotatory motion transmission means (13).

During the mutual rotation of the sprocket with respect to the annular body the centering of the two elements is provided by the contact between the inner lateral surface (17) of the annular body (1) and the outer lateral surface of the cylinder defined by some longitudinal ridges (34 and 25) projecting from the lower face of the sprocket (3) and from the inner face of said base cap (2) respectively.

According to a preferred embodiment of the invention, a washer (6) is interposed between the lower portion of said elastic contrast means (5) and the sprocket (3) underneath, whose outer lateral surface is in contact with the inner lateral surface of said elastic tangs, so as to prevent the latter from disconnecting from the sprocket (3). Conveniently the side openings comprise respective removable internal bushings (15) which guide the extraction of the cutting wire which crosses them; in order to reduce wear and tear and to increase the effects of the centrifugal force, these bushings are often made from metal. According to an effective embodiment, said removable internal bushings (15) are open above and define a transversal slit (16).

Advantageously transversal ridges (41) project below from said cover (4) and engage respective transversal slits (16) of said removable internal bushings (15) so as to further stabilize the cutting wire and reduce the stresses induced by transmission of motion onto the elastic tangs.

A more stable coupling is obtained between the elements of the feeding assembly thanks to the sliding engagement of some ridges (34) which project from the lower part of the sprocket (3) to as many longitudinal slots (23) cut in the internal part of said base cap (2).

## Claims

1. A head for brush cutters comprising a sprocket (3) for a cutting wire, rotationally and slidingly associated with an annular body (1) underneath, the latter provided above with side containment means (14) which define an at least partially cylindrical cavity, which receives said sprocket (3), also including side openings to make it possible for the wire to go out; said sprocket (3) being connected to a base cap (2) underneath by way of connection means (21) which slidingly cross said annular body (1), within which they are free to rotate; said annular body (1) being in turn connected to a cover (4) placed above which receives motion from the brush cutter and transmits it to said annular body (1), thus co-operating below with said sprocket (3) by way of elastic contrast means (5), the upper face of said annular body (1) comprising rotatory motion transmission means (13) which engage corresponding rotatory motion reception means (33) present in the lower part of said sprocket (3), whereby pushing said base cap (2) upwards results in overcoming the action exerted by said elastic contrast means (5) and said sprocket (3) moves from an extended work position to a retracted wire feeding position, thus interrupting the rotatory motion transmission between said annular body (1) and said sprocket (3), **characterized in that** said base cap (2) radially extends beyond the central hole of said annular body (1).

2. The head for brush cutters according to the previous claim 1, **characterized in that** said base cap (2) radially extends beyond the outer lateral surface of said annular body (1).

3. The head for brush cutters according to the previous claim 2, **characterized in that** the lateral surface (24) of said base cap (2) longitudinally extends upwards and at least partially winds said annular body (1).

4. The head for brush cutters according to any of the previous claims, **characterized in that** said rotatory motion transmission means (13) are of a unidirectional type.

5. The head for brush cutters according to any of the previous claims, **characterized in that** said connection means (21) are reversible.

6. The head for brush cutters according to any of the previous claims, **characterized in that** said connection means (21) comprise male connectors in the form of elastic snap tangs which longitudinally rise up from the upper face of said base cap (2) and whose ends include a respective wedge-shaped ridge (22) which engages a corresponding insertion seat (32) present in the upper part of said sprocket (3), after crossing corresponding longitudinal slits (31) present in the body of said sprocket (3).

7. The head for brush cutters according to any of the previous claims, **characterized in that** said annular body (1) is connected to said cover (4) by way of reversible connection means (11).

8. The head for brush cutters according to the previous claim, **characterized in that** said reversible connection means (11) comprise male connectors in the form of elastic snap tangs which longitudinally rise up from the upper face of said annular body (1) and whose ends include a respective wedge-shaped ridge (12) which engages a corresponding insertion seat (42) present in said cover (4) .

9. The head for brush cutters according to any of the previous claims, **characterized in that** a bushing (6) is interposed between the lower portion of said elastic contrast means (5) and the sprocket (3) underneath, the outer lateral surface of the bushing is in contact with the inner lateral surface of said connection means (21) so as to prevent the latter from disengaging said sprocket (3).

10. The head for brush cutters according to any of the previous claims, **characterized in that** said side openings of said annular body (1) comprise respective removable internal bushings (15) through which the cutting wire goes out.

11. The head for brush cutters according to the previous claim 11, **characterized in that** each of said removable internal bushings (15) is open above and defines a transversal slit (16).

12. The head for brush cutters according to the previous claim 10, **characterized in that** transversal ridges (41) project from the lower face of said cover (4) and engage said transversal slits (16) of said bushings (15) respectively.

13. The head for brush cutters according to any of the previous claims, **characterized in that** the inner part of said base cap (2) comprises longitudinal slots (23) which are slidingly engaged by as many longitudinal ridges (34) which project from the lower part of said sprocket (3).

14. The head for brush cutters according to any of the previous claims, **characterized in that** said elastic contrast means (5) comprise at least one helical spring.

## Patentansprüche

1. Kopf für Freischneider, umfassend ein Ritzel (3) für einen Schneidedraht, drehbar und verschiebbar assoziiert mit einem darunterliegenden ringförmigen Körper (1), wobei der Letztere oben mit Seitenaufnahmemitteln (14) versehen ist, die einen mindestens teilweise zylindrischen Hohlraum definieren, der das Ritzel (3) aufnimmt, zudem aufweisend Seitenöffnungen, damit der Draht heraustritt, wobei das Ritzel (3) mit einer darunterliegenden Basiskappe (2) mittels Verbindungsmitteln (21) verbunden ist, die verschiebbar den ringförmigen Körper (1) kreuzen, innerhalb dessen sie sich frei drehen können, wobei der ringförmige Körper (1) wiederum mit einer darüberliegenden Abdeckung (4) verbunden ist, die vom Freischneider angetrieben wird und die Bewegung auf den ringförmigen Körper (1) überträgt, wodurch sie unterhalb mit dem Ritzel (3) durch elastische Kontrastmittel (5) kooperiert, wobei die obere Fläche des ringförmigen Körpers (1) Drehbewegungsübertragungsmittel (13) umfasst, die in entsprechende Drehbewegungsaufnahmemittel (33) eingreifen, die im unteren Teil des Ritzels (3) bereitgestellt sind, wodurch durch das Drücken der Basiskappe (2) nach oben die von den elastischen Kontrastmitteln (5) ausgeübte Wirkung überwunden wird und das Ritzel (3) sich von einer ausgefahrenen Arbeitsposition in eine eingefahrene Drahtzuführungsposition bewegt, wodurch die Übertragung der Drehbewegung zwischen dem ringförmigen Körper (1) und dem Ritzel (3) unterbrochen wird, **dadurch gekennzeichnet, dass** sich die Basiskappe (2) radial jenseits des mittigen Lochs des ringförmigen Körpers (1) erstreckt.

2. Kopf für Freischneider nach dem vorhergehenden Anspruch 1, **dadurch gekennzeichnet, dass** sich die Basiskappe (2) radial jenseits der außenseitigen seitlichen Oberfläche des ringförmigen Körpers (1) erstreckt.

3. Kopf für Freischneider nach dem vorhergehenden Anspruch 2, **dadurch gekennzeichnet, dass** sich die seitliche Oberfläche (24) der Basiskappe (2) längsseitig nach oben erstreckt und mindestens teilweise den ringförmigen Körper (1) umwindet.

4. Kopf für Freischneider nach einem der vorhergehenden Ansprüche, **dadurch gekennzeichnet, dass** die Drehbewegungsübertragungsmittel (13) von einem unidirektionalen Typ sind.

5. Kopf für Freischneider nach einem der vorhergehenden Ansprüche, **dadurch gekennzeichnet, dass** die Verbindungsmittel (21) reversibel sind.

6. Kopf für Freischneider nach einem der vorhergehenden Ansprüche, **dadurch gekennzeichnet, dass** die Verbindungsmittel (21) Steckverbinder in Form elastischer Schnappgriffzungen umfassen, die längsseitig von der oberen Fläche der Basiskappe (2) nach oben stehen und deren Enden einen jeweiligen keilförmigen Ansatz (22) umfassen, der in einen entsprechenden Einfügesitz (32) eingreift, der im oberen Teil des Ritzels (3) bereitgestellt ist, nach dem Kreuzen entsprechender Längsschlitze (31), die im Körper des Ritzels (3) bereitgestellt sind.

7. Kopf für Freischneider nach einem der vorhergehenden Ansprüche, **dadurch gekennzeichnet, dass** der ringförmige Körper (1) mit der Abdeckung (4) mittels reversibler Verbindungsmittel (11) verbunden ist.

8. Kopf für Freischneider nach dem vorhergehenden Anspruch, **dadurch gekennzeichnet, dass** die reversiblen Verbindungsmittel (11) Steckverbinder in Form elastischer Schnappgriffzungen umfassen, die längsseitig von der oberen Fläche des ringförmigen Körpers (1) nach oben stehen und deren Enden einen jeweiligen keilförmigen Ansatz (12) umfassen, der in einen entsprechenden Einfügesitz (42) eingreift, der in der Abdeckung (4) bereitgestellt ist.

9. Kopf für Freischneider nach einem der vorhergehenden Ansprüche, **dadurch gekennzeichnet, dass** eine Scheibe (6) zwischen dem unteren Abschnitt der elastischen Kontrastmittel (5) und dem darunterliegenden Ritzel (3) eingesetzt ist, wobei die außenseitige seitliche Oberfläche mit der innenseitigen seitlichen Oberfläche der Verbindungsmittel (21) in Kontakt ist, sodass verhindert wird, dass diese sich aus dem Ritzel (3) lösen.

10. Kopf für Freischneider nach einem der vorhergehenden Ansprüche, **dadurch gekennzeichnet, dass** die Seitenöffnungen des ringförmigen Körpers (1) jeweilige entfernbare interne Buchsen (15) umfassen, durch die der Schneidedraht heraustritt.

11. Kopf für Freischneider nach einem dem vorhergehenden Anspruch 11, **dadurch gekennzeichnet, dass** die entfernbaren internen Buchsen (15) oben offen sind und einen Querschlitz (16) definieren.

12. Kopf für Freischneider nach einem dem vorhergehenden Anspruch 10, **dadurch gekennzeichnet, dass** die Queransätze (41) aus der unteren Fläche der Abdeckung (4) hervorstehen und jeweils in die Querschlitze (16) der Buchsen (15) eingreifen.

13. Kopf für Freischneider nach einem der vorhergehenden Ansprüche, **dadurch gekennzeichnet, dass** der innere Teil der Basiskappe (2) längsseitige Aussparungen (23) umfasst, in die verschiebbar ebenso viele längsseitige Ansätze (34) eingreifen, die aus dem unteren Teil des Ritzels (3) hervorstehen.

14. Kopf für Freischneider nach einem der vorhergehenden Ansprüche, **dadurch gekennzeichnet, dass** die elastischen Kontrastmittel (5) mindestens eine Schraubenfeder umfassen.

## Revendications

1. Tête pour débroussailleuses comprenant une bobine (3) pour un fil tranchant, associée d'une manière rotationnelle et coulissante à un corps annulaire (1) en dessous, celui-ci étant équipé au-dessus de moyens latéraux de rétention (14) qui définissent une cavité, au moins partiellement cylindrique, laquelle accueille ladite bobine (3), et ayant également des ouvertures latérales pour la sortie du fil; ladite bobine (3) étant reliée à une calotte de base (2) en dessous à travers des moyens de raccordement (21) qui traversent ledit corps annulaire (1) d'une manière coulissante, à l'intérieur duquel ils sont libres de tourner; ledit corps annulaire (1) étant à son tour relié à un couvercle (4) au-dessus, qui reçoit le mouvement de la débroussailleuse et le transmet audit corps annulaire (1), tout en coopérant en dessous avec ladite bobine (3) à travers des moyens élastiques de contraste (5), la face supérieure dudit corps annulaire (1) comprenant des moyens de transmission du mouvement rotatif (13) qui engagent des moyens de réception du mouvement rotatif (33) correspondants présents dans la partie inférieure de ladite bobine (3) de telle sorte que, en poussant ladite calotte de base (2) vers le haut, l'action exercée par lesdits moyens élastiques de contraste (5) est surmontée, et ladite bobine (3) passe d'une position étendue de travail à une position retraite d'alimentation du fil, la transmission du mouvement rotatif entre ledit corps annulaire (1) et ladite bobine (3) s'interrompant, **caractérisée en ce que** ladite calotte de base (2) s'étend radialement au-delà du trou central dudit corps annulaire (1).

2. Tête pour débroussailleuses selon la revendication précédente 1, **caractérisée en ce que** ladite calotte de base (2) s'étend radialement au-delà de la surface latérale externe dudit corps annulaire (1).

3. Tête pour débroussailleuses selon la revendication précédente 2, **caractérisée en ce que** la surface latérale (24) de ladite calotte de base (2) s'étend longitudinalement vers le haut tout en enroulant, au moins partiellement, ledit corps annulaire (1).

4. Tête pour débroussailleuses selon l'une quelconque des revendications précédentes, **caractérisée en ce que** lesdits moyens de transmission du mouvement rotatif (13) sont d'un type unidirectionnel.

5. Tête pour débroussailleuses selon l'une quelconque des revendications précédentes, **caractérisée en ce que** lesdits moyens de raccordement (21) sont réversibles (ACCENTO).

6. Tête pour débroussailleuses selon l'une quelconque des revendications précédentes, **caractérisée en ce que** lesdits moyens de raccordement (21) comprennent des connecteurs mâles ayant la forme de languettes élastiques de déclenchement que s'élèvent longitudinalement de la face supérieure de ladite calotte de base (2) et dont les extrémités présentent une saillie cunéiforme respective (22) qui engage un siège d'enclenchement (32) correspondant présent dans la partie supérieure de ladite bobine (3), après avoir traversé des fentes longitudinales (31) correspondantes présentes dans le corps de ladite bobine (3) .

7. Tête pour débroussailleuses selon l'une quelconque des revendications précédentes, **caractérisée en ce que** ledit corps annulaire (1) est relié audit couvercle (4) à travers des moyens de raccordement réversibles (11).

8. Tête pour débroussailleuses selon la revendication précédente, **caractérisée en ce que** lesdits moyens de raccordement réversibles (11) comprennent des connecteurs males ayant la forme de languettes élastiques de déclenchement qui s'élèvent longitudinalement de la face supérieure dudit corps annulaire (1) et dont les extrémités présentent une saillie cunéiforme (12) respective qui engage un siège d'enclenchement (42) correspondant présent dans ledit couvercle (4).

9. Tête pour débroussailleuses selon l'une quelconque des revendications précédentes, **caractérisée en ce qu'**une rondelle est interposée entre la portion inférieure desdits moyens élastiques de contraste (5) et la bobine (3) en dessous, dont la surface latérale externe fait contact avec la surface latérale interne desdits moyens de raccordement (21) de telle sorte à empêcher que ceux-ci se séparent de ladite bobine (3).

10. Tête pour débroussailleuses selon l'une quelconque des revendications précédentes, **caractérisée en ce que** lesdites ouvertures latérales dudit corps (1) comprennent des douilles amovibles internes (15) respectives à travers lesquelles se produit la sortie du fil tranchant.

11. Tête pour débroussailleuses selon la revendication précédente 11, **caractérisée en ce que** chacune desdites douilles amovibles internes (15) est ouverte au-dessus et définit une fente transversale (16).

12. Tête pour débroussailleuses selon la revendication précédente 10, **caractérisée en ce que** des saillies transversales (41) font saillie par rapport à la face inférieure dudit couvercle (4), et engagent respectivement lesdites fentes transversales (16) desdites douilles (15).

13. Tête pour débroussailleuses selon l'une quelconque des revendications précédentes, **caractérisée en ce que** la partie interne de ladite calotte de base (2) comprend des créneaux longitudinaux (23) lesquels sont engagés d'une manière coulissante par autant de saillies longitudinales (34) qui font saillie du côté dessous de ladite bobine (3).

14. Tête pour débroussailleuses selon l'une quelconque des revendications précédentes, **caractérisée en ce que** lesdits moyens élastiques de contraste (5) comprennent au moins un ressort hélicoidal.
